# EUROPÄISCHE PATENTSCHRIFT

(11) **EP 1 384 025 B1**
(45) Veröffentlichungstag und Bekanntmachung des Hinweises auf die Patenterteilung: **22.03.2006**
(21) Anmeldenummer: 02769105.4
(22) Anmeldetag: 19.04.2002
(51) Int. Cl.: F16L 55/05

(54) **VORRICHTUNG ZUM DÄMPFEN VON DRUCKPULSATIONEN IN EINEM HYDRAULIKSYSTEM**
DEVICE FOR DAMPING PRESSURE PULSES IN A HYDRAULIC SYSTEM
DISPOSITIF POUR AMORTIR LES PULSATIONS DE PRESSION DANS UN SYSTEME HYDRAULIQUE

(30) Priorität: 04.05.2001 AT 7142001
(43) Veröffentlichungstag der Anmeldung: 28.01.2004
(73) Patentinhaber: Institut für Mechanik und Maschinenlehre Johannes Kepler Universität Linz, 4040 Linz (AT)
(72) Erfinder: MIKOTA, Josef, A-4460 Losenstein (AT)
(74) Vertreter: Hübscher, Helmut
(86) Internationale Anmeldenummer: PCT/AT2002/000118
(87) Internationale Veröffentlichungsnummer: WO 2002/090815

(56) Entgegenhaltungen:
- DE-A- 3 338 416
- DE-A- 4 304 248
- DE-U- 8 715 311
- US-A- 1 536 531
- US-A- 2 774 381
- US-A- 3 623 572
- US-A- 5 816 291
- US-A- 5 820 227

## Beschreibung

### Technisches Gebiet

Die Erfindung bezieht sich auf eine Vorrichtung zum Dämpfen von Druckpulsationen in einem Hydrauliksystem mit einem vom Hydrauliksystem beaufschlagbaren, durch ein Federelement abgestützten Schwingungskörper, der in Beaufschlagungsrichtung in einem Gehäuse verschiebbar geführt ist und mit dem Federelement ein Schwingungssystem mit einer an die Anregungsfrequenz durch die Druckpulsation angeglichenen Eigenfrequenz ergibt,.

### Stand der Technik

Durch die Ungleichförmigkeit des Volumenstromes von Verdrängungsmaschinen, sei es des Fördervolumenstromes von Pumpen oder des Verbrauchervolumenstromes von Motoren oder aber auch durch periodisch mit hoher Frequenz betätigte Hydraulikventile, kommt es in Hydrauliksystemen zu Volumenstrompulsationen, die Druckpulsationen zur Folge haben. Um die durch diese Druckpulsationen bedingten Nachteile hinsichtlich der zusätzlichen Belastungen, der Geräuschbildung und des Einflusses auf das dynamische Verhalten von Aktuatoren zu vermeiden, ist es unter anderem bekannt (WO 94118488 A1), einen auf mechanischen Federn abgestützten Schwingungskörper mit den Druckpulsationen des Hydrauliksystems zu beaufschlagen, so daß die Druckpulsationen des Hydrauliksystems durch die Schwingungen des Schwingungskörpers kompensiert werden, wenn die Eigenfrequenz des aus der Masse des Schwingungskörpers und den Federn gebildeten Schwingungssystems an die Anregungsfrequenz der Druckpulsation angeglichen wird. Nachteilig bei dieser bekannten Konstruktion ist allerdings, daß die Federn zur Abstutzung des Schwingungskörpers über den Schwingungskörper mit dem Druck des Hydrauliksystems beaufschlagt werden, was zu vergleichsweise großen Belastungen der Federn und damit zu einer entsprechenden massiven Federausbildung führt Als unabdingbare Folge davon müssen einerseits ein gesteigerter Konstruktionsaufwand und anderseits eine entsprechende Baugröße in Kauf genommen werden.
Darüber hinaus ist es zur Lärmdämmung in hydraulischen Leitungen bekannt (US 3 623 572 A), einen Dämpfungskolben vorzusehen, der von der Druckschwingungen ausgesetzten Hydraulikflüssigkeit beaufschlagt wird, und zwar gegen die Kraft einer Feder. Der den Dämpfungskolben mit der Feder aufnehmende Zylinderraum ist über eine Drosselbohrung mit dem Beaufschlagungsraum für den Dämpfungskolben verbunden, so daß sich ein zeitlich verzögerter Druckausgleich zwischen dem Zylinderraum und dem Beaufschlagungsraum für den Dämpfungskolben mit der Wirkung ergibt, daß der Dämpfungskolben entsprechend den Druckschwankungen mit einer zeitlichen Verzögerung hin- und herbewegt wird, um die Druckschwankungen auszugleichen. Da der als Stufenkolben ausgebildete Dämpfungskolben über die Drosselbohrung beidseits beaufschlagt wird, braucht über die Feder nicht der im Beaufschlagungsraum herrschende Hydraulikdruck vollständig aufgenommen zu werden. Trotzdem bleibt die Dämpfung der Druckschwingungen von der Wirkung der Feder abhängig, die den Kolben beim Fehlen einer Hydraulikströmung in eine den Beaufschlagungsraum abschließende Schließstellung verlagert, aus der der Dämpfungskolben mit dem Auftreten einer Hydraulikströmung in eine anschlagbegrenzte Öffnungsstellung bewegt wird.

### Darstellung der Erfindung

Der Erfindung liegt somit die Aufgabe zugrunde, eine Vorrichtung der eingangs geschilderten Art zum Dämpfen, von Druckpulsationen in einem Hydrauliksystem so auszugestalten, daß eine gedrungene Bauweise sichergestellt werden kann, ohne eine Überlastung von Konstruktionsteilen auch bei vergleichsweise hohen Drücken des Hydrauliksystems befürchten zu müssen.

Die Erfindung löst die gestellte Aufgabe dadurch, daß das Gehäuse einen den Schwingungskörper aufnehmenden, mit einem Hydraulikmittel als Federelement gefüllten Druckraum und einen Beaufschlagungsraum bildet, zwischen dem und dem Druckraum eine durch einen Beaufschlagungsteil des Schwingungskörpers verschlossene Durchtrittsöffnung vorgesehen ist.

Da zufolge dieser Maßnahmen das Hydraulikmittel im Druckraum als Federelement für den Schwingungskörper genützt wird, entfallen die sonst für die Eigenschwingungen des Schwingungskörpers erforderlichen mechanischen Federn, was eine wesentliche Voraussetzung für eine einfache, kompakte Konstruktion darstellt. Wird aufgrund von Druckpulsationen des Hydrauliksystems der Schwingungskörper mit einem größeren Druck beaufschlagt, so führt die dadurch bedingte Verschiebung des Schwingungskörpers zu einem Druckanstieg im Druckraum, weil ja die Durchtrittsöffnung zwischen dem Druckraum und dem Beaufschlagungsraum durch den Beaufschlagungsteil des Schwingungskörpers verschlossen ist. Der erhöhte Druck im Druckraum bedingt eine Rückstellkraft auf den Schwingungskörper, sobald sich der Beaufschlagungsdruck verringert, wobei sich aufgrund des elastischen Verhaltens des Hydraulikmittels im Druckraum ein Schwingungssystem mit einer im wesentlichen der Masse des Schwingungskörpers entsprechenden Masse und einer Feder ergibt, deren Steifigkeit vor allem durch das Volumen des Hydraulikmittels im Druckraum, die wirksame Beaufschlagungsfläche des Schwingungskörpers sowie durch den Kompressi-onsmodul des Hydraulikmittels bestimmt wird und daher auch über diese Einflußgrößen festgelegt werden kann.

Der zylindrische Beaufschlagungsteil des Schwingungskörpers braucht die Durchtrittsöffnung zwischen dem Druckraum und dem Beaufschlagungsraum nicht flüssigkeitsdicht abzuschließen. Ragt der zylindrische Beaufschlagungsteil des Schwingungskörpers unter Freilassung eines Dichtungsspaltes durch die Durchtrittsöffnung, so läßt sich in einfacher Weise ein Ausgleich der mittleren Drücke im Beaufschlagungsraum und im Druckraum erreichen, ohne das für die Kompensation der Druckpulsation des Hydrauliksystems erforderliche Schwingungsverhalten des Schwingungskörpers zu gefährden, weil die durch den Dichtspalt gebildete Drossel für das Hydraulikmittel den Durchgriff höher frequenter Druckschwingungen unterbindet, den Ausgleich niederfrequenter Schwankungen des mittleren Druckes zwischen Beaufschlagungsraum und Druckraum aber erlaubt. Eine solche sich durch eine besondere Einfachheit auszeichnende Konstruktion hat aber den Nachteil, daß die Scherströmung im Dichtspalt zwischen dem schwingenden Schwingungskörper und der Durchtrittsöffnung zum Druckraum zu einer Dissipation führt. Um eine solche Dissipation weitgehend zu vermeiden, kann der zylindrische Beaufschlagungsteil des Schwingungskörpers mit Hilfe einer Membran flüssigkeitsdicht, aber schwingungsfähig in einem Führungsring gelagert und über diesen Führungsring unter Freilassung eines Dichtungsspaltes in die Durchtrittsöffnung zwischen Druckraum und Beaufschlagungsraum eingesetzt werden. Da die Abdichtung des schwingenden Schwingungskörpers gegenüber dem ruhenden Führungsring über die zwischen dem Führungsring und dem Beaufschlagungsteil des Schwingungskörpers vorgesehene, elastische Membran erfolgt, tritt im Dichtungsspalt zwischen dem Führungsring und der Durchtrittsöffnung keine Scherspannung auf, so daß mit einer nur geringen Dissipation gerechnet werden kann. Der Mitteldruckausgleich bleibt dabei über den Dichtungsspalt zwischen dem Führungsring und der Durchtrittsöffnung erhalten.

Selbstverständlich ist es auch möglich, einen flüssigkeitsdichten Abschluß der Durchtrittsöffnung zwischen Druckraum und Beaufschlagungsraum vorzusehen, beispielsweise durch eine Membran, was den Vorteil mit sich bringt, eine vom Hydraulikmittel im Hydrauliksystem unterschiedliche Flüssigkeit im Druckraum einsetzen zu können, um beispielsweise durch die Wahl einer Flüssigkeit mit einem geeigneten Kompressionsmodul Einfluß auf die Eigenfrequenz des durch den Schwingungskörper und diese Flüssigkeit bestimmten Schwingungssystems nehmen zu können.

Wird für einen Mitteldruckausgleich zwischen dem Beaufschlagungsraum und dem Druckraum gesorgt, so ist für die Einhaltung einer mittleren Schwingungslage des Schwingungskörpers zu sorgen, weil sonst der Schwingungskör per gewichtsbedingt in eine Anschlagstellung gleitet, aus der eine Schwingungsanregung nicht oder nur beschränkt möglich ist. Zu diesem Zweck kann der Schwingungskörper über wenigstens eine Feder abgestützt werden, die das gewichtsbedingte Verlagern des Schwingungskörpers verhindert. Da die Steifigkeit dieser Feder im Vergleich zur Federsteifigkeit der Hydraulikmittelfüllung des Druckraumes klein ist, ist der Einfluß dieser Feder auf das Schwingungsverhalten des Schwingungskörpers vernachlässigbar.

Wie bereits ausgeführt wurde, ist für das Eigenschwingungsverhalten neben der Masse des Schwingungskörpers die Federsteifigkeit des Hydraulikmittels im Druckraum und damit das zur Aufnahme des Hydraulikmittels vorhandene Volumen des Druckraumes mitbestimmend. Damit ein ausreichendes Hydraulikmittelvolumen bei geringen Gehäuseabmessungen sichergestellt werden kann, kann der zur Schwingungsrichtung des Schwingungskörpers senkrechte Querschnitt des Druckraumes größer als der entsprechende Querschnitt des Schwingungskörpers sein, so daß der Schwingungskörper mit Ausnahme des in die Durchtrittsöffnung eingreifenden Beaufschlagungsteils vom Hydraulikmittel umschlossen ist.

Zur Anpassung an unterschiedliche Frequenzen der Druckpulsationen des Hydrauliksystems kann das Volumen des Druckraumes eingestellt werden. Zu diesem Zweck kann an den Druckraum wenigstens ein ebenfalls mit Hydraulikmittel gefüllter Zusatzdruckraum über ein Schaltventil angeschlossen werden, so daß sich das für die Federsteifigkeit maßgebende Volumen des Hydraulikmittels durch das Zuschalten wenigstens eines Zusatzdruckraumes stufenweise vergrößern läßt. Zur kontinuierlichen Anpassung des für die Federsteifigkeit maßgebenden Hydraulikmittelvolumens kann der Druckraum aus zwei miteinander hydraulisch verbundenen Kammern bestehen, von denen die eine den Schwingungskörper aufnimmt und die andere in ihrem Volumen über einen Kolben verstellbar ist. Um eine einseitige Druckbelastung dieses Kolbens zu vermeiden, kann dieser Kolben zum Verstellen des Kammervolumens auf der dem Schwingungskörper abgewandten Beaufschlagungsseite vom Hydrauliksystem her beaufschlagt werden.

### Kurze Beschreibung der Zeichnung

In der Zeichnung ist der Erfindungsgegenstand beispielsweise dargestellt. Es zeigen
- Fig. 1: eine erfindungsgemäße Vorrichtung zum Dämpfen von Druckpulsationen in einem Hydrauliksystem schematisch in einem Längsschnitt,
- Fig.: 2 eine der Fig. 1 entsprechende Darstellung einer Konstruktionsvariante,
- Fig. 3: ein weiteres Ausführungsbeispiel einer erfindungsgemäßen Vorrichtung in einem schematischen Längsschnitt,
- Fig. 4: eine erfindungsgemäße Vorrichtung mit einer Einstelleinrichtung für die Eigenfrequenz in einem schematischen Längsschnitt und
- Fig. 5: eine weitere erfindungsgemäße Vorrichtung mit einer Einstelleinrichtung für die Eigenfrequenz ebenfalls in einem schematischen Längsschnitt.

### Weg zur Ausführung der Erfindung

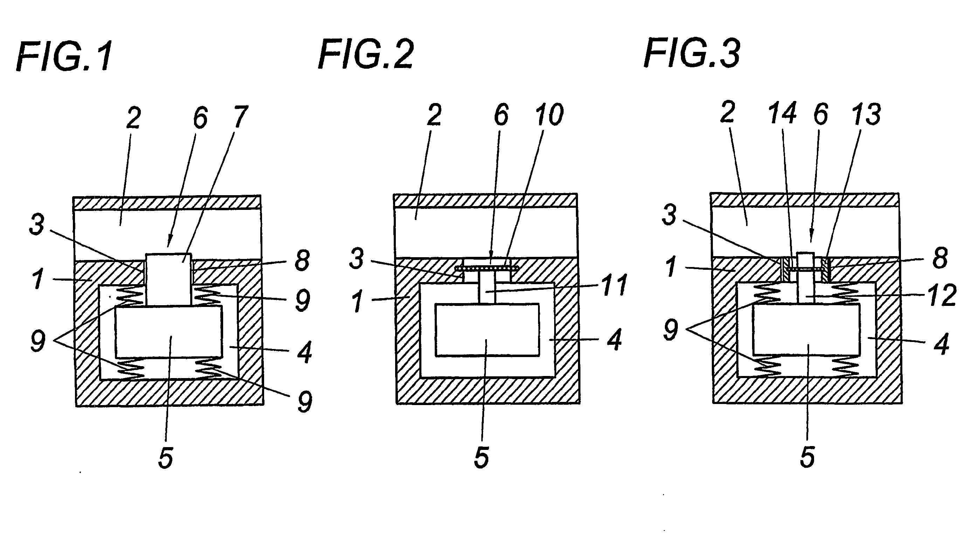

Eine erfindungsgemäße Vorrichtung zum Dämpfen von Druckpulsationen in einem Hydrauliksystem besteht aus einem Gehäuse 1, das einen an das Hydrauliksystem über nicht dargestellte Druckleitungen angeschlossenen Beaufschlagungsraum 2 und einen vom Beaufschlagungsraum 2 durch eine Durchtrittsöffnung 3 getrennten Druckraum 4 zur Aufnahme eines Schwingungskörpers 5 bildet, der mit einem Beaufschlagungsteil 6 die Durchtrittsöffnung 3 verschließt. Gemäß dem Ausführungsbeispiel nach der Fig. 1 wird der Beaufschlagungsteil 6 durch einen zylindrischen Ansatz 7 gebildet, der unter Freilassung eines Dichtungsspaltes 8 verschiebbar in der Durchtrittsöffnung 3 geführt ist. Im Einsatz der Vorrichtung ist sowohl der Beaufschlagungsraum 2 als auch der Druckraum 4 mit einem Hydraulikmittel gefüllt. Über mechanische Federn 9 wird der Schwingungskörper 5 in einer mittleren Schwingungslage gehalten, so daß beim Auftreten von Druckpulsationen im Hydrauliksystem der zylindrische Ansatz 7 des Beaufschlagungsteils 6 mit diesen Druckpulsationen beaufschlagt wird, was aufgrund der dadurch bedingten Verschiebungen des Schwingungskörpers 5 eine Druckerhöhung des Hydraulikmittels im Druckraum 4 mit der Folge nach sich zieht, daß der Schwingungskörper 5 beim Abfall der Druckspitzen im Hydrauliksystem rückgestellt wird. Ist die Eigenfrequenz des mit dem Hydraulikmittel im Druckraum als Federelement zusammenwirkenden Schwingungskörper 5 der Anregungsfrequenz durch die Druckpulsation im Hydrauliksystem angenähert gleich, so werden die Druckpulsationen im Hydrauliksystem weitgehend kompensiert. Die Federn 9 spielen für das Schwingungsverhalten des Schwingungskörpers 5 keine Rolle, weil deren Federsteifigkeit gegenüber der des Hydraulikmittels im Druckraum 4 vemachlässigbar ist. Die Federn 9 brauchen ja nur die mittlere Schwingungslage des Schwingungskörpers 5 zu sichern. Über den Dichtungsspalt 3 ist zwar ein Mitteldruckausgleich zwischen dem Beaufschlagungsraum 2 und dem Druckraum 4 möglich, nicht aber ein Ausgleich höherfrequenter Druckpulsationen, so daß sich eine besonders einfache Konstruktion ergibt, die außerdem eine gedrängte Bauweise ermöglicht, weil der zur Schwingungsrichtung des Schwingungskörpers 5 senkrechte Querschnitt des Druckraumes 4 größer als der entsprechende Querschnitt des Schwingungskörpers 5 gewählt werden kann.

Die Ausführungsform nach der Fig. 2 zeigt einen über eine Membran 10 flüssigkeitsdicht verschlossene Durchtrittsöffnung 3, wobei diese Membran 10 als Beaufschlagungsteil 6 für den Schwingungskörper 5 dient, der mit der Membran 10 über einen Ansatz 11 verbunden ist. Die Wirkung des Schwingungskörpers 5 hinsichtlich der Kompensation von Druckpulsationen des Hydrauliksystems bleibt gleich.

Entsprechend der Fig. 3 greift der Schwingungskörper 5 mit dem Beauf schlagungsteil 6 in Form eines vorzugsweise zylindrischen Ansatzes 12 in einen Führungsring 13 ein, mit dem der Ansatz 12 über eine Membran 14 flüssigkeitsdicht verbunden ist, die die Schwingungsbewegung des Schwingungskörpers 5 gegenüber dem Führungsring 13 zuläßt. Da zwischen dem Führungsring 13 und der Durchtrittsöffnung 3 ein Dichtspalt 8 freibleibt, ergibt sich über diesen Dichtspalt 8 ein Mitteldruckausgleich zwischen dem Beaufschlagungsraum 2 und der Druckkammer 4. Im Gegensatz zu der Ausführungsform nach der Fig. 1 bedingt die Schwingungsbewegung des Schwingungskörpers 5 jedoch keine Scherströmung im Dichtspalt 8, was eine erhebliche Verringerung der Dissipation im Vergleich zur Ausführungsform nach der Fig. 1 mit sich bringt.

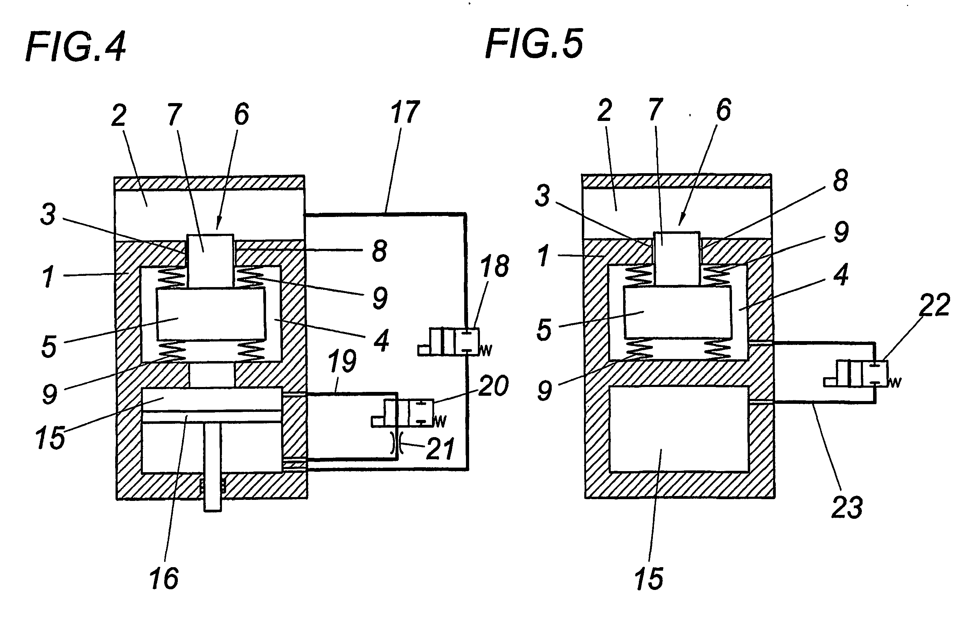

Wie der Fig. 4 entnommen werden kann, kann die Eigenfrequenz des Schwingungskörpers 5 über das die Federsteifigkeit des Hydraulikmittels mitbestimmende Hydraulikmittelvolumen an die jeweilige Anregefrequenz der Druckpulsationen im Hydrauliksystem angeglichen werden. Zu diesem Zweck ist an den Druckraum 4 ein durch eine zweite Gehäusekammer gebildeter Zusatzdruckraum 15 angeschlossen, dessen Größe über einen Kolben 16 eingestellt werden kann. Der zur Einstellung des Kolbens 16 vorgesehene Aktuator ist aus Übersichtlichkeitsgründen nicht dargestellt. Um eine einseitige Belastung des Kolbens 16 durch den Mitteldruck des Hydrauliksystems zu vermeiden, wird der Kolben 16 auf der dem Schwingungskörper 5 abgekehrten Beaufschlagungsseite über eine Ausgleichsleitung 17 mit dem Mitteldruck des Hydrauliksystems beaufschlagt, wenn die Ausgleichsleitung 17 mit Hilfe eines Schaltventiles 18 durchgeschaltet wird. Die beidseitige Beaufschlagung des Kolbens 16 macht jedoch zu seiner Verstellung eine Verbindungsleitung 19 zwischen den beiden Beaufschlagungsseiten des Kolbens 16 notwendig, wobei über ein Schaltventil 20 und/oder eine Drossel 21 ein Ausgleich der höherfrequenten Druckpulsationen unterbunden wird.

Nach der Fig. 5 ist lediglich ein Zusatzdruckraum 15 über ein Schaltventil 22 an den Druckraum 4 anschließbar, so daß je nach der Schaltstellung des Schaltventiles 22 das wirksame Hydraulikmittelvolumen durch das Hydraulikmittel im Druckraum 4 oder durch das Gesamtvolumen des Hydraulikmittels im Druckraum 4 und im Zusatzdruckraum 15 bestimmt wird. Es muß allerdings dafür gesorgt werden, daß über die Verbindung 23 zwischen Druckraum 4 und Zusatzdruckraum 15 eine Übertragung der Druckpulsationen sichergestellt wird.

## Patentansprüche

1. Vorrichtung zum Dämpfen von Druckpulsationen in einem Hydrauliksystern mit einem vom Hydrauliksystem beaufschlagbaren, durch ein Federelement abgestützten Schwingungskörper (5), der in Beaufschlagungsrichtung in einem Gehäuse (1) verschiebbar geführt ist und mit dem Federelement ein Schwingungssystem mit einer an die Anregungsfrequenz durch die Druckpulsation angeglichenen Eigenfrequenz ergibt, **dadurch gekennzeichnet, daß** das Gehäuse (1) einen den Schwingungskörper (5) aufnehmenden, mit einem Hydraulikmittel als Federelement gefüllten Druckraum (4) und einen Beaufschlagungsraum (2) bildet, zwischen dem und dem Druckraum (4) eine durch einen Beaufschlagungsteil (6) des Schwingungskörpers (5) verschlossene Durchtrittsöffnung (3) vorgesehen ist.

2. Vorrichtung nach Anspruch 1, **dadurch gekennzeichnet, daß** der zylindrische Beaufschlagungsteil (6) des Schwingungskörpers (5) unter Freilassung eines Dichtungsspaltes (8) durch die Durchtrittsöffnung (3) zwischen Druckraum (4) und Beaufschlagungsraum (2) ragt.

3. Vorrichtung nach Anspruch 1, **dadurch gekennzeichnet, daß** der zylindrische Beaufschlagungsteil (6) des Schwingungskörpers mit Hilfe einer Membran (14) flüssigkeitsdicht, aber schwingungsfähig in einem Führungsring (13) gelagert und über diesen Führungsring (13) unter Freilassung eines Dichtungsspaltes (8) in die Durchtrittsöffnung (3) zwischen Druckraum (4) und Beaufschlagungsraum (2) eingesetzt ist.

4. Vorrichtung nach einem der Ansprüche 1 bis 3, **dadurch gekennzeichnet, daß** der Druckraum (4) ein angenähert dem doppelten Volumen des Schwingungskörpers (5) entsprechendes Volumen aufweist.

5. Vorrichtung nach einem der Ansprüche 1 bis 4, **dadurch gekennzeichnet, daß** der Schwingungskörper (5) über wenigstens eine Feder (9) in einer mittleren Schwingungslage gehalten ist

6. Vorrichtung nach einem der Ansprüche 1 bis 5, **dadurch gekennzeichnet, daß** der zur Schwingungsrichtung des Schwingungskörpers (5) senkrechte Querschnitt des Druckraumes (4) größer als der entsprechende Querschnitt des Schwingungskörpers (5) ist.

7. Vorrichtung nach einem der Ansprüche 1 bis 6. **dadurch gekennzeichnet, daß** das Volumen des Druckraumes (4) einstellbar ist.

8. Vorrichtung nach Anspruch 7, **dadurch gekennzeichnet, daß** an den Druckraum (4) wenigstens ein ebenfalls mit Hydraulikmittel gefüllter Zusatzdruckraum (15) über ein Schaltventil (22) anschließbar ist.

9. Vorrichtung nach Anspruch 7, **dadurch gekennzeichnet, daß** der Druckraum (4) aus zwei miteinander hydraulisch verbundenen Kammern besteht, von denen die eine den Schwingungskörper (5) aufnimmt und die andere in ihrem Volumen über einen Kolben (16) verstellbar ist.

10. Vorrichtung nach Anspruch 9, **dadurch gekennzeichnet, daß** der Kolben (16) zum Verstellen des Kammervolumens auf der dem, Schwingungskörper (5) abgewandten Beaufschlagungsseite vom Hydrauliksystem beaufschlagbar ist.

## Claims

1. Device for damping pressure pulses in a hydraulic system with an oscillation body (5) supported by a spring element and adapted to be impacted by the hydraulic system, wherein the oscillation body (5) is guided so as to be displaceable in a housing (1) and with the spring element forms an oscillation system with a natural frequency adapted to the excitation frequency through the pressure pulses, **characterised in that** the housing (1) forms a pressure chamber (4) filled with a hydraulic medium as the spring element and receiving the oscillation body (5) and an impact area (2), between which and the pressure chamber (4) a passage opening (3) which is closed by an impacting part (6) of the oscillation body (5) is provided.

2. Device according to claim 1, **characterised in that** the cylindrical impacting part (6) of the oscillation body (5) projects through the passage opening (3) between the pressure chamber (4) and impact area (2), leaving free a sealing gap (8).

3. Device according to claim 1, **characterised in that** the cylindrical impacting part (6) of the oscillation body is mounted in a guide ring (13) so as to be fluid-tight with the aid of a diaphragm (14) but able to oscillate and via this guide ring (13) is inserted into the passage opening (3) between the pressure chamber (4) and impact area (2), leaving free a sealing gap (8).

4. Device according to one of the claims 1 to 3, **characterised in that** the pressure chamber (4) has a volume corresponding to approximately double the volume of the oscillation body (5).

5. Device according to one of the claims 1 to 4, **characterised in that** the oscillation body (5) is held in a middle oscillation position by means of at least one spring (9).

6. Device according to one of the claims 1 to 5, **characterised in that** the cross-section of the pressure chamber (4) perpexidicularZy to the oscillation direction of the oscillation body (5) is larger than the corresponding cross-section of the oscillation body (5).

7. Device according to one of the claims 1 to 6, **characterised in that** the volume of the pressure chamber (4) can be set.

8. Device according to claim 7, **characterised in that** at least one additional pressure chamber (15) also filed with hydraulic medium can be connected to the pressure chamber (4) by means of a switching valve (22).

9. Device according to claim 7, **characterised in that** the pressure chamber (4) comprises two hydraulically connected chambers, of which one receives the oscillation body (5) and the other can be adjusted in volume by means of a piston (16).

10. Device according to claim 9, **characterised in that** the piston (16) is adapted to be impacted by the hydraulic system for the purpose of adjusting the chamber volume on the impact side facing away from the oscillation body (5).

## Revendications

1. Dispositif pour amortir des pulsations de pression dans un système hydraulique, avec un corps oscillant (5), susceptible d'être sollicité par un système hydraulique, soutenu par un élément élastique, guidé de façon déplaçable en direction de la sollicitation dans un boîtier (1) et donnant, avec l'élément élastique, un système oscillant ayant une fréquence propre devant être rendue égale à la fréquence d'excitation émanant de la pulsation de pression, **caractérisé en ce que** le boîtier (1) forme une enceinte à pression (4), recevant le corps oscillant (5), remplie d'un fluide hydraulique faisant office d'élément élastique, et une enceinte de sollicitation (2), entre laquelle et l'enceinte à pression (4) est prévue une ouverture de passage (3), fermée par une partie de sollicitation (6) du corps oscillant (5).

2. Dispositif selon la revendication 1, **caractérisé en ce que** la partie de sollicitation (6) cylindrique du corps oscillant (5) pénètre à travers l'ouverture de passage (3) ménagée entre l'enceinte à pression (4) et l'enceinte de sollicitation (2), en laissant libre un intervalle d'étanchéité (8).

3. Dispositif selon la revendication 1, **caractérisé en ce que** la partie de sollicitation (6) cylindrique du corps oscillant est montée à l'aide d'une membrane (14), de façon étanche aux liquides mais susceptible de vibrer, dans une bague de guidage (13) et, par l'intermédiaire de cette bague de guidage (13), est insérée dans l'ouverture de passage (3) existant entre l'enceinte à pression (4) et l'enceinte de sollicitation (2), en laissant libre un intervalle d'étanchéité (8).

4. Dispositif selon l'une des revendications 1 à 3, **caractérisé en ce que** l'enceinte à pression (4) présente un volume à peu près du double du volume correspondant au corps oscillant (5).

5. Dispositif selon l'une des revendications 1 à 4, **caractérisé en ce que** le corps oscillant (5) est maintenu, par au moins un ressort (9), en une position d'oscillation moyenne.

6. Dispositif selon l'une des revendications 1 à 5, **caractérisé en ce que** la section transversale, perpendiculairement par rapport à la direction d'oscillation du corps oscillant (5), de l'enceinte à pression (4) est plus grande que la section transversale correspondante du corps oscillant (5).

7. Dispositif selon l'une des revendications 1 à 6, **caractérisé en ce que** le volume de l'enceinte à pression (4) est réglable.

8. Dispositif selon la revendication 7, **caractérisé en ce qu'**au moins une enceinte à pression additionnelle (15), également remplie de fluide hydraulique, peut être raccordée à l'enceinte à pression (4) par l'intermédiaire d'une soupape de commutation (22).

9. Dispositif selon la revendication 7, **caractérisé en ce que** l'enceinte à pression (4) est formée de deux chambres reliées ensemble hydrauliquement, dont l'une reçoit le corps oscillant (5) et l'autre est de volume réglable, par l'intermédiaire d'un piston (16).

10. Dispositif selon la revendication 9, **caractérisé en ce que** le piston (16) devant régler le volume de chambre est sollicité par le système hydraulique, depuis le côté de sollicitation opposé au corps oscillant (5).
